# EUROPEAN PATENT APPLICATION

(11) **EP 4 303 259 A1**
(43) Date of publication of application: **10.01.2024**
(21) Application number: 23177663.4
(22) Date of filing: 06.06.2023
(51) Int. Cl.: C08K 7/14, F02M 37/00

(54) **POLYAMIDE PARTS WITH LOW FUEL PERMEATION**

(30) Priority: 06.07.2022 EP 22183345
(71) Applicant: EMS-CHEMIE AG, 7013 Domat/Ems (CH)
(72) Inventor: ABT, Doris, 4103 Bottmingen (CH); HOFFMANN, Botho, 7013 Domat/Ems (CH)
(74) Representative: Bremi, Tobias Hans

(57) **Abstract**

Use of a part comprising at least a portion of a polyamide moulding composition said portion for direct contact with fuel,
wherein the polyamide moulding composition consists of the following components in the following proportions:
(A) 30-90% by weight of at least one polyamide;
(B) 10-70% by weight of fibers with non-circular cross-section;
(C) 0-10% by weight of at least one stabiliser;
(D) 0-10% by weight of additives different from (B) and (C),

wherein the sum of (A)-(D) makes up 100% of the portion.

## Description

### TECHNICAL FIELD

The present invention relates to polyamide-based parts with low permeation with respect to fuel, in particular for the automotive field.

### PRIOR ART

Owing to increasingly stringent requirements faced by developers of automotive components due to changing emission standards, parts that make up fuel systems must demonstrate low permeation of fuels and of volatile components thereof. This includes fuel lines, fuel tanks and the connectors which are used to attach lines to each other or to other automotive parts.

Fluid lines are typically manufactured by coextrusion, where at least one layer can be a high-barrier material (EVOH, fluoropolymer, polyvinyl alcohol, etc.). The choice of material enables tuning of flexibility of the line while incorporating a layer that limits fuel permeation. Similarly, an automotive fuel tank is typically a multilayer construction, such as a blow-moulded vessel of HDPE with a barrier layer of EVOH.

WO-A-2012013569 relates to a fuel part, comprising a polymer composition comprising: i. a polyamide A, and ii. micro talcum in an amount of 0.001 to 1 weight percent with respect to the total amount of the polymer composition, wherein the polymer composition has a melt volume flow rate (MVR) of at most 70 cm³/10 min at a weight of 21.6 kg and at a temperature of Tₘₑₐₛᵤᵣₑ as measured according to ISO 1133. It also relates to a process for preparation of such fuel part wherein a blow-molding or roto-molding process is applied. EP-A-1241229 describes fuel parts comprising a crystalline polyamide resin having a terminal amino group concentration larger than a terminal carboxyl group concentration and excellent in fuel resistance at their weld portion, which fuel parts are suited for use as various parts to be attached to fuel tanks of automobiles and the like, and a process for producing the fuel parts. It evidences that polyamide swells with fuel containing methanol or ethanol as in gasohol at such high using temperatures and in particular, an elastic modulus in a direction perpendicular to the orientation reinforcing direction of glass fibers shows a marked decrease, leading to a creeping phenomenon and therefore proposes to add talcum instead.

WO-A-2012110511 discloses a polyamide composition comprising a first polyamide, characterized in that the composition further comprises polyamide-PXD10 in an amount of at least 0.01 wt%, based on the total amount of polyamides in the composition. In a preferred embodiment, the first polyamide is an aliphatic polyamide chosen from the group of polyamide-6, polyamide-66 and polyamide-46. A fuel part, comprising the polyamide composition is also described.

WO-A-2019122142 describes a polyamide composition comprising semi-aromatic, semi-crystalline copolyamide 66/6A, with A being a monomeric unit derived from an aromatic carboxylic acid. In combination with flat glass fibers, the system shows a reduced uptake of ambient moisture following storage at 70°C/62% relative humidity for 14 days. The described copolyamide is essential to the invention.

EP-A-1609595 describes a multilayer container which is high in fuel impermeability, impact resistance and recyclability. The multilayer container includes a polyamide layer, a polyethylene layer and a modified polyethylene layer. The modified polyethylene layer is formed of polyethylene modified with at least one of an unsaturated carboxylic acid or a derivative of an unsaturated carboxylic acid. In the multilayer container, the polyamide layer, the polyethylene layer and the modified polyethylene layer are laminated to form a laminate structure. The polyamide layer is formed of a polyamide resin or a resin mixture containing a polyamide resin, the polyamide layer containing an inorganic compound having an average particle diameter of 150 nm or less, in an amount of not larger than 0.2 part by weight relative to 100 parts by weight of the polyamide resin or the resin mixture. US-A-2004135371 describes a fuel pipe joint having fuel permeation resistance, particularly a fuel pipe joint for use in automobiles, which can reduce the amount of fuel permeated through the wall and exhibits rigidity and fuel barrier property even at high temperatures, the fuel pipe joint using a joint material comprising a polyamide (nylon 9T) consisting of a dicarboxylic acid component and a diamine component, with 60 to 100 mol % of the dicarboxylic acid component being a terephthalic acid and 60 to 100 mol % of the diamine component being a diamine component selected from 1,9-nonanediamine and 2-methyl-1,8-octanediamine. The joint material may further comprise a reinforcing and/or an electrically conducting filler. The electrically conducting filler may have an aspect ratio of 50 or more and a short diameter of 0.5 nm to 10 µm.

US-A-2005263202 describes a polymeric fuel system component made from a polyamide composition comprising one or more of polyamide 6,10 and polyamide 6,12 or copolymers thereof; stainless steel fibers and/or carbon nanotubes; an impact modifier; a plasticizer; and, optionally, other additives.

DE-A-102005025905 describes a method of reducing fuel vapor permeation through a multi-layer tank by providing a multi-layer overlay onto at least a portion of a structural layer of the multi-layer tank. The multi-layer overlay preferably comprises at least one structural layer composed of a polymeric material that is compatible with one or more of the polymeric structural layer(s) of the multi-layer tank. The multi-layer overlay further comprises at least one barrier layer composed of a vapor barrier material resistant to hydrocarbon permeation therethrough. The multi-layer overlay may be secured to the multi-layer tank by, for example, applying a suitable amount of heat and pressure thereto or by molding the multi-layer overlay to the tank body during a tank forming process.

US-A-2014066560 discloses a thermoplastic moulding composition, in particular a polyamide moulding composition, consisting of, by weight: (A) 20-88%-thermoplastic material; (B) 10-60%-fibrous fillers, formed from (B1) 10-60%-glass fibres, selected from: glass fibres (B1_1) with a non-circular cross section, wherein the axis ratio of the main cross-sectional axis to the secondary cross-sectional axis is at least 2; high-strength glass fibres (B1_2) with a glass composition (substantially SiO2, AlO, and MgO; or mixtures thereof; (B2) 0-20%-glass fibres, different from glass fibres of component (B1) and have a circular cross section; and (B3) 0-20%-further fibrous fillers, different from fibres of (B1) and (B2), not based on glass, and selected from the group: carbon fibres, graphite fibres, aramid fibres, nanotubes; (C) 2-10%-LDS additive or a mixture of LDS additives; (D) 0-30%-particulate filler; (E) 0-2%-further, different additives; the sum of (A)-(E) is 100% by weight. US-A-2015175803 relates to thermoplastic, white-pigmented plastics moulding compositions having improved mechanical properties, especially for LDS applications. The thermoplastic moulding composition consists of: (A) 20-88 wt % of a mixture consisting of (A1) 60-100 wt % of a thermoplastic (A2) 0-40 wt % of a mixture of (A2_1) 0-40 wt % of a thermoplastic other than (A1); (A2_2) 0-40 wt % of impact modifiers other than (A1) and (A2_1); (B) 10-70 wt % of fibrous adjuvants; (C) 0.1-10 wt % of an LDS additive or of a mixture of LDS additives, at least one LDS additive being selected from the following group: metal oxide based on copper, neodymium, molybdenum, bismuth, antimony or tin, with the proviso that spinels are excluded; metal phosphate; metal hydroxide phosphate; (D) 0.1-20 wt % of white pigment; (E) 0-20 wt % of particulate filler other than C and/or D; (F) 0-2 wt % of further, different additives; a the sum of (A)-(F) making up 100 wt %. WO-A-2018011131 relates to a polyamide moulding compound consisting of the following components: (A) 35-68 wt.% of at least one semi-crystalline, semi-aromatic, thermoplastic polyamide based on aliphatic diamines with 4-8 carbon atoms with a melting temperature of at least 270°C; (B) 15-22 wt.% carbon fibres; (C) 18-30 wt.% glass fibres; (D) 1-10 wt.% of an impact-resistance modifier that is different from (E) and/or polymers that are different from (A), (E) and (F); (E) 0-10 wt.% ethylene-vinyl acetate copolymer; and (F) 0-3 wt.% additives. In this way, the sum of the components (A)-(F) is 100 wt.%, the sum of the components (B)-(C) is in the range of 33-48 wt.%, and the sum of the components (D)-(E) is in the range of 2-12 wt.%. The moulding compound permits the production of dimensionally stable, electrically conductive components, e.g. for the automotive sector and for contact with fuels, in particular methanol-containing petrol.

### SUMMARY OF THE INVENTION

It is an object of the present invention to provide reinforced polyamide-based parts having low permeation values for use in particular in the automotive field for fuels.

Permeation for the purpose of the invention may be defined as the loss of liquid, in this case in particular fuel, to the material. A part is exposed to a liquid for a given time, after which the gravimetric change in the material is deemed to be the uptake by, or permeation of, the material. Permeation is measured for the purpose of the invention for fuels in accordance with DIN 53122-1, which mandates use of a container with a test fuel onto which a test specimen is placed. The system is then optionally exposed to heat. The permeation is then gravimetrically determined and expressed in terms of the amount of fuel that permeates the exposure area over time.

It is in particular an object of the present invention to provide reinforced connectors that combine the mechanical advantages of the prior art and overcome the problems in fluid permeation. Ideally a solution is sought that solves permeation of fuel by means of a material enhancement thus allowing the material to be used in a wide range of applications, avoiding the need for additional barrier layers, multi-step manufacture or complex designs. This object has been achieved by the parts according to claim 1.

It was surprisingly found that a part according to claim 1 has both excellent mechanical properties and significantly lower permeation of fuel such as FAM-B, E10 or E85, in particular at elevated temperatures such as 60°C, when compared with a connector made of moulding composition that contains glass fibres with circular cross section.

The fuel lines and tanks form a network for fuel storage and transportation within a vehicle. These are connected by means of connectors. Connectors are typically manufactured by injection moulding, where the potential for barrier layers is much more limited than for the manufacturing methods of lines or tanks. There is therefore a need for low-permeation automotive components, in particular for low-permeation connector parts. The requirements for low permeation in connectors are therefore to be addressed at a material level.

The use of flat glass fibers in polyamide moulding compositions as such for achieving certain processing and/or mechanical properties is known.

Reference is for example made to EP-A-1942147, which describes reinforced polyamide molding materials, which comprise: a polyamide matrix containing (wt.%): (A) aliphatic, partly crystalline polyamides (0-60) with a solution viscosity of more than 1.3 to less than 1.9 (preferably 1.4 to less than 1.9), and (B) at least one amorphous or microcrystalline polyamide (0-60); a filler component containing (wt.%): (C) flat glass fibers (40-80) with elongated shape and the glass fibers have a non-circular cross-sectional area, and (D) particle like or layer like fillers (0-40); and optionally (E) up to 5 wt.% of usual additives and adjuvants.

Reference is further made to WO-A-2020083901, which describes a polyamide composition (P) comprising specific flat glass fibres (B) with elongated shape having a non-circular cross- sectional area. The polyamide composition (P) is advantageously used for the production of molded parts. The invention also relates to use of molded parts obtainable by molding of the polyamide composition (P) to produce mechanical parts. The molded parts are characterized by having improved fatigue resistance properties. In one embodiment, the invention is also concerned with a polyamide composition (P) comprising PA 66 as polyamide (A) and flat glass fibres (B) as defined in the claims and specification. However what is not disclosed or suggested in any of the prior art documents dealing with flat glass fibre reinforced polyamide moulding compositions is that such moulding compositions may have an increased permeation resistance when exposed directly to the claimed fluids. Permeation is the amount of liquid that disappears from the system with the described apparatus, temperature, liquid and test specimen per area and day as soon as a linear loss has set in.

More generally speaking, the present invention relates to a part for use or to the use of a part comprising at least a portion (e.g. in the form of a section or the inner surface, which has substantially direct exposure to the fuel during correct use) of a polyamide moulding composition said portion for direct contact with at least one liquid selected from the group consisting of fuels.

According to the invention, the polyamide moulding composition consists of the following components in the following proportions:
(A) 30-90%, preferably 50-90% by weight of at least one polyamide;
(B) 10-70%, preferably 10-50% by weight of fibers with non-circular cross-section;
(C) 0-10% by weight of at least one stabiliser;
(D) 0-10% by weight of additives different from (B) and (C),
wherein the sum of (A)-(D) makes up 100% of the portion.

According to a first preferred embodiment, the polyamide moulding composition has the following proportions:
(A) 52-80% by weight, preferably 55-75% by weight, most preferably 60-70% by weight of component (A);
(B) 15-45% by weight, preferably 20-40% by weight, most preferably 25-35% by weight of component (B);
(C) 0.05-8% by weight, preferably 0.1-5% by weight, most preferably 0.15-2% by weight of component (C);
(D) 0.01-8% by weight, preferably 0.1-5% by weight, most preferably 0.5-3% by weight of component (D)
where again in each case the sum of (A)-(D) makes up 100% of the portion.

### Polyamide, component A

The connector of the invention is made of a moulding composition that comprises at least one polyamide. The polyamide used may be a polyamide made from at least one dicarboxylic acid and at least one diamine (a so-called AABB-polyamide), with general formula -[NH-(CH₂)ₓ-NH-CO-(CH₂)_{y}-CO]ₙ-, or it may be a polyamide derived from a lactam or α,ω-amino acid (AB polyamide), with general formula -[NH-(CH₂)ₓ-CO]ₙ-.

In the case of AABB polyamides, the diamine component may be either an aliphatic diamine, where x = 4-10, preferably, X = 4-8, most preferably X = 6; or the diamine component may be a cycloaliphatic diamine. Such preferred cycloaliphatic diamines include 1,3-bis(aminomethyl)cyclohexane (1,3-BAC), 1,4-bis(aminomethyl)cyclohexane (1,4-BAC), bis(4-aminocyclohexyl)methane (PACM), isophoronediamine (IPD), and bis(3-methyl-4-aminocyclohexyl)methane (MACM). The diamine component may also comprise an aromatic moiety, such as m-xylylenediamine (MXDA) or p-xylylenediamine (PXDA).

The dicarboxylic acid component of AABB polyamides may be an aliphatic dicarboxylic acid. Examples of dicarboxylic acids for use in the invention include succinic acid, glutaric acid, adipic acid, pimelic acid, suberic acid, azelaic acid, sebacic acid, undecanedioic acid, dodecanedioic acid, brassylic acid, thapsic acid or octadecanedioic acid.

Particular examples of AABB polyamides that may be used for the connectors of the invention are PA: 46, 66, 410, 610, 612, 614, 416, 616, 618, 6I/6T, 6T/6I, 56, 510, 512, 514, 516, 518, 1010, 1012,1014, 1016, 1018, MACM12, PACM12, MACM14, PACM14. Preferably the AABB polyamides used in the invention are selected from the group PA 610, 612, 616,1010 and mixtures thereof.

Examples of AB polyamides include PA 6, PA12 and PA 11. Preferably when an AB polyamide is used in the connectors of the invention, it is chosen as PA12. Copolyamides and blends of the aforementioned polyamides may also be used for the inventive connectors. Examples of copolyamides include PA 6/12, PA 6/66.

Furthermore the connector may be made of a moulding composition comprising a semiaromatic polyamide, which may also be known as a polyphthalamide. Examples of semiaromatic polyamides include 4T, 5T, 6T, 9T, 10T, 12T, where for ease of processing it may be advantageous to use the semiaromatic unit as part of a copolyamide. Examples of suitable copolyamides include PA 6T/6I, 6T/66, 6T/12, 6T/612, 6T/10T, 10T/12, 10T/612, 10T/11, 1012/10T, 1212/10T, 1212/6T, 1010/6T.

Such semiaromatic copolyamides may be amorphous or semicrystalline. Preferably these are preferably semicrystalline.

Connectors of the invention may comprise both an aliphatic polyamide (A1) and a semiaromatic polyamide (A2). For example, the connector may comprise a blend of PA 66 as component (A1) and a semiaromatic PA 6I/6T as component (A2).

The polyamide A of the invention has a relative viscosity ηᵣₑₗ of at least 1.6. Preferably the relative viscosity of the polyamide is at least 1.63, measured in m-cresol (0.5 wt.%) according to ISO 307)

To summarise, according to a preferred embodiment component (A) in a major proportion comprises or consists of at least one polyamide with a relative viscosity, measured according to ISO 307:2019 in m-cresol at a concentration of 0.5 weight percent at a temperature of 20°C of at least 1.5, preferably of at least 1.7, most preferably of at least 1.8 or at least 1.9.

Further preferably, component (A) is at least one aliphatic or partially aromatic polyamide derived from at least one dicarboxylic acid and at least one diamine or from at least one lactam or α,ω-amino acid, wherein preferably component (A) is selected from at least one of polyamide 6, polyamide 12, polyamide 11, polyamide 6/12, polyamide 6/66, preferably polyamide 12, and/or is derived from at least one aliphatic or aromatic dicarboxylic acid, preferably selected from the group consisting of succinic acid, glutaric acid, adipic acid, pimelic acid, suberic acid, azelaic acid, sebacic acid, undecanedioic acid, dodecanedioic acid, brassylic acid, thapsic acid or octadecanedioic acid, terephthalic acid, isophthalic acid, or a combination thereof and from at least one aromatic, aliphatic or cycloaliphatic diamine selected from the group consisting of: an aliphatic, preferably linear diamine with 4-10, preferably 4-8, most preferably 6 carbon atoms, 1,3-bis(aminomethyl)cyclohexane (1,3-BAC), 1,4-bis(aminomethyl)cyclohexane (1,4-BAC), bis(4-aminocyclohexyl)methane (PACM), isophoronediamine (IPD), bis(3-methyl-4-aminocyclohexyl)methane (MACM), m-xylylenediamine (MXDA), p-xylylenediamine (PXDA) or a combination thereof, wherein preferably component (A) is selected as one or more homopolyamide and/or copolyamide from the group consisting of polyamides (PA): 12, 46, 66, 410, 610, 612, 614, 416, 616, 618, 6I/6T, 6T/6I, 56, 510, 512, 514, 516, 518, 1010, 1012,1014, 1016, 1018, MACM12, PACM12, MACM14, PACM14, MACMI/12, 6I/6T/612/MACMI/MACMT/MACM12, MACMI/MACMT/12, 6I/6T/MACMI/MACMT/PACMI/PACMT/12, 4T, 5T, 6T, 9T, 10T, 12T, 6T/6I, 6T/66, 6T/12, 6T/612, 6T/10T, 10T/12, 10T/612, 10T/11, 1012/10T, 1212/10T, 1212/6T, 1010/6T.

Component (A) preferably consists of at least one lactam-based polyamide based on lactam with at least 8 carbon atoms, preferably at least 10 carbon atoms, most preferably 12 carbon atoms, wherein preferably it primarily or completely consists of such a lactam-based polyamide or is a blend of such lactam-based polyamides preferably comprising at least one lactam with a relative viscosity of at least 1.9 measured according to ISO 307:2019 in m-cresol at a concentration of 0.5 weight percent at a temperature of 20°C.

In a further preferred embodiment, the polyamide of component A is characterized by the ratio of acid end-groups to amine end groups. Preferably there is an excess of amine end groups, more preferably there is a concentration of amino groups in the range of 30 - 90 mmol/kg, most preferably the concentration of amine end groups is in the range of 40 - 60 mmol/kg.

### Fibers, component B

The composition of the invention further comprises reinforcement fibers with a non-circular cross section. Such fibers are characterised by an elongated cross section and have two axes: a long cross-sectional axis (major axis) and a short cross-sectional axis (minor axis). The major and minor axes are oriented perpendicular to one another.

When the reinforcing fibers are made from glass, the fibers are known as flat glass fibers. Regarding the dimensions of the glass fibers of the invention, ratio of the short cross-sectional axis to the long cross-sectional axis of the glass fibers is preferably 1 to at least 1.1, preferably 1 to at least 3, most preferably 1 to at least 4.

The glass fibres used in the invention have a short cross-sectional axis of ≥ 2.5 µm, preferably ≥ 2.65 µm, most preferably ≥ 3 µm.

The glass fibers of the invention may be flat-shaped (i.e. with an ovaloid cross section), or cocoon-shaped, which approximate overlapping and intersecting circular shaped fibers with at least one groove running along the length of the fibre.

The glass fibres, while satisfying the described criteria with respect to shape and diameter, may also be characterised by their length. The fibres of the invention are preferably chopped strands. The length of the chopped strands used in the invention preferably < 8 mm, preferably < 6 mm, most preferably ≤ 3 mm. The conditions of processing the materials lead to mechanical stress being exerted on the materials and on the glass fibres. In order to maintain the length of the glass fibres in the extrusion process, the glass fibres are preferably added to the moulding composition downstream in the extrusion process, i.e. at a point closer to the extrusion die.

The glass used for the glass fibres of the invention is selected from the group consisting of S-glass, E-glass, D-glass, HR-glass, C-glass, S2-glass, E-CR glass and mixtures thereof. Preferably the fibres are made of S-glass, E-glass or mixtures thereof. Most preferably the fibres of the invention are made of E-glass.

The glass fibres used in the invention have further preferably been treated with a sizing agent. Such a coating serves to compatibilise the glass fiber with the polymer matrix, while also protecting the glass fibers against excessive friction and damage in processing. The sizing of the glass fibers used in the invention is preferably an aminosilane compound.

So preferably, component (B) is selected as glass fibres, preferably selected from E glass, A glass, C glass, D glass, M glass, S glass, R glass or mixtures thereof, wherein E glass is preferred, wherein preferably the fibres are provided with a sizing, preferably an aminosilane sizing.

Further preferably the fibres of component (B) have a ratio of cross-sectional major to minor axes in the range between 8 and 2, preferably between 6 and 2, more preferably between 5 and 3
and/or wherein the length of the major axis is in the range of 15-40µm, preferably in the range of 20-35µm, and the length of the minor axis is in the range of 4-15µm, preferably in the range of 5-10µm.

### Stabilizer, component C

The stabilisers of the invention are preferably selected as organic stabilisers, preferably organic stabilisers based on sterically hindered phenols and/or phosphonites. Organic stabilizers are preferred over inorganic stabilizers inter alia because the latter when in contact with fuel can be released from the polyamide molding composition into the fuel and can negatively influence the catalyst of the combustion engine.

In a preferred embodiment, heat stabilisers are chosen from the group consisting of sterically-hindered phenols, inorganic stabilisers and organic phosphonites. The heat stabilisers most preferably comprise a sterically-hindered phenol stabiliser in combination with an organic phosphonite.

Preferred hindered phenols include N,N'-hexamethylene-bis-3-(3,5-di-tert-butyl-4-hydroxyphenyl)-propionamide, bis-(3,3-bis-(4'-hydroxy-3'-tert-butylphenyl)-butanoic acid)-glycol ester, 2,1'-thioethylbis-(3-(3,5-di-tert-butyl-4-hydroxyphenyl)-propionate, 4,4'-butylidene-bis-(3-methyl-6-tert-butylphenol), ethylene bis[3,3-bis(3-tert-butyl-4-hydroxyphenyl)butyrate], triethyleneglycol-3-(3-tert-butyl-4-hydroxy-5-methylphenyl)-propionate, octadecyl-3-(3,5-di-tert-butyl-4-hydroxyphenyl)propionate, 1,3,5-trimethyl-2,4,6-tris(3,5-di-tert-butyl-4-hydroxybenzyl)benzene, Brüggolen TP-H7005 or mixtures of two or more thereof.

The stabiliser may be an organic stabiliser selected from the group consisting of stabilisers based on secondary aromatic amines, in particular adducts from phenylenediamine with acetone (Naugard A) adducts from phenylenediamine with linolene, Naugard 445, N,N'-dinaphthyl-p-phenylenediamine, N-phenyl-N'-cyclohexyl-p-phenylenediamine or mixtures of two or more thereof, stabilisers from the group of phosphites and phosphonites, in particular triphenylphosphite, diphenylalkylphosphite, phenyldialkylphosphite, tris(nonylphenyl)phosphite, trilaurylphosphite, trioctadecylphosphite, distearylpentaerythritoldiphosphite, tris(2,4-di-tert-butylphenyl)phosphite, diisodecylpentaerythritoldiphosphite, bis(2,4-di-tert-butylphenyl)pentaerythritoldiphosphite, bis(2,6-di-tert-butyl-4-methylphenyl)-pentaerythritoldiphospite, diisodecyloxypentaerythritoldiphospite, bis(2,4-di-tert-butyl-6-methylphenyl) pentaerythritoldiphosphite, bis(2,4,6-tris-(tert-butylphenyl))pentaerythritol-diphosphite, tristearylsorbitoltriphosphite, tetrakis(2,4-di-tert-butylphenyl)-4,4'-biphenylenediphosphonite, 6-isooctyloxy-2,4,8,10-tetra-tert-butyl-12H-dibenz-[d,g]-1,3,2-dioxaphosphocine, 6-fluoro-2,4,8,10-tetra-tert-butyl-12-methyl-dibenz[d,g]-1,3,2-dioxaphosphocine, bis(2,4-di-tert-butyl-6-methylphenyl)methylphosphite and bis(2,4-di-tert-butyl-6-methylphenyl)ethylphosphite, tris[2-tert-butyl-4-thio(2'-methyl-4'-hydroxy-5'-tert-butyl)-phenyl-5-methyl]phenyl-phosphite and tris(2,4-di-tert-butylphenyl)phosphite (Hostanox^{®} PAR24: commercial product of the company Clariant, Basel) Brüggolen TP-H7005, 2,6-di-tert-butyl-4-(4,6-bis(octylthio)-1,3,5-triazian-2-ylamino)phenol (Irganox^{®} 565: commercial product of the company BASF), triethyleneglycol bis(3-tert-butyl-4-hydroxy-5-methylphenyl)propionate (Irganox^{®} 245: commercial product of the company BASF), tetrakis-methylene(3,5-di-tert-butyl-4-hydroxyhydrocinnamate)methane (Irganox^{®} 1010: commercial product of the company BASF), 3-(3,5-di-tert-butyl-4-hydroxyphenyl)propionic acid (Irganox^{®} 1310: commercial product of the company BASF), 2,2"-methylenebis-(6-tert-butyl-p-cresol)monoacrylate (Irganox^{®} 3052: commercial product of the company BASF) and mixtures thereof.

It is further possible to use an inorganic stabilizer. The inorganic stabilizer preferably comprises both copper halides and potassium halides. More preferably the inorganic stabilizer is a blend of potassium iodide and copper iodide. Furthermore the polyamide may be stabilized by a system comprising a lanthanide salt such as cerium.

To summarise, component (C) is preferably selected as at least one light stabiliser or at least one heat stabiliser, preferably from at least one organic heat stabiliser and/or antioxidant, preferably at least one organic stabilisers based on sterically hindered phenols and/or phosphonites, most preferably selected from the group consisting of N,N'-hexamethylene-bis-3-(3,5-di-tert-butyl-4-hydroxyphenyl)-propionamide, bis-(3,3-bis-(4'-hydroxy-3'-tert-butylphenyl)-butanoic acid)-glycol ester, 2,1'-thioethylbis-(3-(3,5-di-tert-butyl-4-hydroxyphenyl)-propionate, 4,4'-butylidene-bis-(3-methyl-6-tert-butylphenol), ethylene bis[3,3-bis(3-tert-butyl-4-hydroxyphenyl)butyrate], triethyleneglycol-3-(3-tert-butyl-4-hydroxy-5-methylphenyl)-propionate, octadecyl-3-(3,5-di-tert-butyl-4-hydroxyphenyl)propionate, 1,3,5-trimethyl-2,4,6-tris(3,5-di-tert-butyl-4-hydroxybenzyl)benzene, adducts from phenylenediamine with acetone, adducts from phenylenediamine with linolene, N,N'-dinaphthyl-p-phenylenediamine, N-phenyl-N'-cyclohexyl-p-phenylenediamine or mixtures of two or more thereof, stabilisers from the group of phosphites and phosphonites, in particular triphenylphosphite, diphenylalkylphosphite, phenyldialkylphosphite, tris(nonylphenyl)phosphite, trilaurylphosphite, trioctadecylphosphite, distearylpentaerythritoldiphosphite, tris(2,4-di-tert-butylphenyl)phosphite, diisodecylpentaerythritoldiphosphite, bis(2,4-di-tert-butylphenyl)pentaerythritoldiphosphite, bis(2,6-di-tert-butyl-4-methylphenyl)-pentaerythritoldiphospite, diisodecyloxypentaerythritoldiphospite, bis(2,4-di-tert-butyl-6-methylphenyl) pentaerythritoldiphosphite, bis(2,4,6-tris-(tert-butylphenyl))pentaerythritoldiphosphite, tristearylsorbitoltriphosphite, tetrakis(2,4-di-tert-butylphenyl)-4,4'-biphenylenediphosphonite, 6-isooctyloxy-2,4,8,10-tetra-tert-butyl-12H-dibenz-[d,g]-1,3,2-dioxaphosphocine, 6-fluoro-2,4,8,10-tetra-tert-butyl-12-methyl-dibenz[d,g]-1,3,2-dioxaphosphocine, bis(2,4-di-tert-butyl-6-methylphenyl)methylphosphite and bis(2,4-di-tert-butyl-6-methylphenyl)ethylphosphite, tris[2-tert-butyl-4-thio(2'-methyl-4'-hydroxy-5'-tert-butyl)-phenyl-5-methyl]phenyl-phosphite and tris(2,4-di-tert-butylphenyl)phosphite, 2,6-di-tert-butyl-4-(4,6-bis(octylthio)-1,3,5-triazian-2-ylamino)phenol, triethyleneglycol bis(3-tert-butyl-4-hydroxy-5-methylphenyl)propionate, tetrakis-methylene(3,5-di-tert-butyl-4-hydroxyhydrocinnamate)methane, 3-(3,5-di-tert-butyl-4-hydroxyphenyl)propionic acid, 2,2"-methylenebis-(6-tert-butyl-p-cresol)monoacrylate and mixtures thereof.

### Additives, component D

The polyamide used for the connectors of the invention further preferably contains at least one additive and/or modifier. The at least one additive and/or modifier is selected from the group consisting of fillers, electrostatic discharge additives, flame retardants, pigments, colorants, markers, lubricants, intumescent agents, plasticisers, impact modifiers, flow aids, nucleants, mould release agents and combinations thereof.

More generally speaking, the additives of component D are preferably selected from the group consisting of non-fibrous fillers, electrostatic discharge additives, preferably chosen from the group consisting of carbon black, carbon nanotubes, carbon fibres, graphene, graphite, and mixtures thereof, flame retardants, pigments, colorants, markers, processing aids including lubricants, intumescent agents, plasticisers, impact modifiers, flow aids, nucleants, mould release agents or a combination thereof.

According to a preferred embodiment, the additives do not include conductivity additives so preferably is free from conductive additives including carbon black, carbon nanotubes or carbon fibers.

Preferably, the polyamide moulding composition of said portion for direct contact with a fuel is free from LDS (laser direct structuring) additives.

In fact, these LDS additives have a negative influence on the mechanical properties of corresponding parts, and during production due to the hardness of these particles they tend to destroy the glass fibers (reduction in average fiber length) which in turn leads to hampered mechanical properties and also reduced permeation properties. Also such additives, in particular the inorganic heavy metal parts thereof, are preferably avoided because they can be released from the polyamide molding composition into the fuel and can negatively influence the catalyst of the combustion engine.

Furthermore, in the presence of oxygen and moisture as well as the supplied engine heat, hydroperoxides are formed from the olefinic fuel components under the influence of heavy metal traces (released by abrasion or, in this case provided by LDS additives), especially copper. When these hydroperoxide-containing fuels come into contact with polymers, they can alter their molecular structure, especially in the presence of heat and metallic catalysts. This results in a rapid decrease in mechanical properties. The LDS additives are also detrimental in this respect.

Preferably the polyamide moulding composition of said portion for direct contact with a fuel is free from LDS additives with an absorption coefficient, different from zero, for UV, VIS or IR radiation, which form metal nuclei under the action of electromagnetic radiation, preferably in the form of laser radiation, said metal nuclei facilitating and/or enabling and/or improving the deposition, in a chemical metallization process, of metal layers in order to generate conductor tracks at the irradiated points over the surface of the moulded part, wherein the LDS additive which is excluded normally has an absorption capability in the visible and infrared radiation range with an absorption coefficient of at least 0.05, or at least 0.1, or at least 0.2, and/or no absorber is provided, which transfers the radiation energy to the LDS additive.

Preferably the polyamide moulding composition of said portion for direct contact with a fuel is free from copper chromite (Cu2CrO4) and/or free from LDS additive in the form of tin oxide and antimony oxide on mica and/or free from LDS additive in the form of tin-based metal phosphate and/or free from LDS additive in the form of tin/antimony oxide on titanium dioxide and/or free from LDS additive in the form of tin antimony cassiterite.

### Structures for the parts and parameters thereof

The parts of the invention may be made by any means known for processing thermoplastics such as injection molding, extrusion molding, thermoforming, blow molding or compression molding. Preferably the part is made by injection moulding.

Preferably the part takes the form of a connector, preferably welded connector, a quick fix connector, preferably for the automotive field for fuel connections.

Connectors made from thermoplastic materials are known in the art. In particular, connectors that are weldable, or connectors that function by a screw-thread mechanism are well-known. Connectors function to connect components of a system. This includes the connection of two or more tubes, the connection of a tube to a tank or to another storage vessel or to a transport module. The term "connector" as used in the context of the invention refers also to fittings and adapters, whereby the latter couples two or more assemblies without the use of a nut and/or a sleeve. In addition, the connectors of the invention also encompass connector parts.

Connectors may be broadly divided into two groups: detachable, or non-permanent connectors; and undetachable, or permanent connectors. The present invention does not distinguish between these categories; the effect of the invention is achieved in each type of connector.

Detachable connectors include connectors that are affixed to the respective components of the junction comprising means such as a screw-thread, bayonet, a quick-connect coupling, a clip or a spring band clamp. Such components are separable and find use in particular when the connection of components is to be made in a vehicle that has already been assembled.

Undetachable connectors include connectors that form connections and are held in place by adhesives, by welded joints or by soldering. Said permanent connections are inseparable and are typically formed prior to the fuel system being installed into a vehicle during assembly.

The connectors of the invention also include 2K or two-component connectors. Such connectors combine reinforced materials and non-reinforced materials in one part. Such 2K connectors are manufactured by means of two-component injection moulding. Advantageously, these parts allow combination of properties and/or processability, for example bridging parts of two different materials. Where connectors of the invention are manufactured by a 2K moulding technology, component A is preferably chosen to comprise a polyamide with an excess of amine groups.

At a periphery of the connector or at an interface of the connector and part it is possible that a sealing element is included. This is preferably a gasket, a grommet, an O-ring or another sealing entity.

Furthermore, the connector may be equipped with one or more barbs or ribs. Said barbs facilitate irreversible connection of connector and component and thus ensure a secure connection.

When connectors of the invention are in contact with flammable liquids, particularly fuels, it may be advantageous that the materials of the connectors comprise an electrically conductive additive. This facilitates the flow of electrical charge along the lines and connectors preventing build-up of static charge in any one particular component of the system, ultimately preventing ignition of the medium being transported.

Preferably the part consists of said polyamide moulding composition.

The invention also relates to a part, preferably a connector comprising at least a portion of a polyamide moulding composition said portion for direct contact with a fuel,
wherein the polyamide moulding composition consists of the following components in the following proportions:
(A) 30-90% or 50-90% by weight of at least one polyamide;
(B) 10-70% or 10-50% by weight of fibers with non-circular cross-section;
(C) 0-10% by weight of at least one stabiliser;
(D) 0-10% by weight of additives different from (B) and (C),
wherein the sum of (A)-(D) makes up 100% of the portion.

The parts of the invention are particularly suitable for having contact with fuel.

If the liquid is in particular selected for test purposes as FAM-B, the permeation value with respect to FAM-B at 60°C is preferably below 80 g/(m^{2*}d), more preferably below 75 g/(m^{2*}d) and most preferably in the range of 60-75 g/(m^{2*}d). As mentioned above, permeation is defined as the amount of liquid that disappears from the system with the described apparatus, temperature, liquid and test specimen per area and day as soon as a linear loss has set in.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

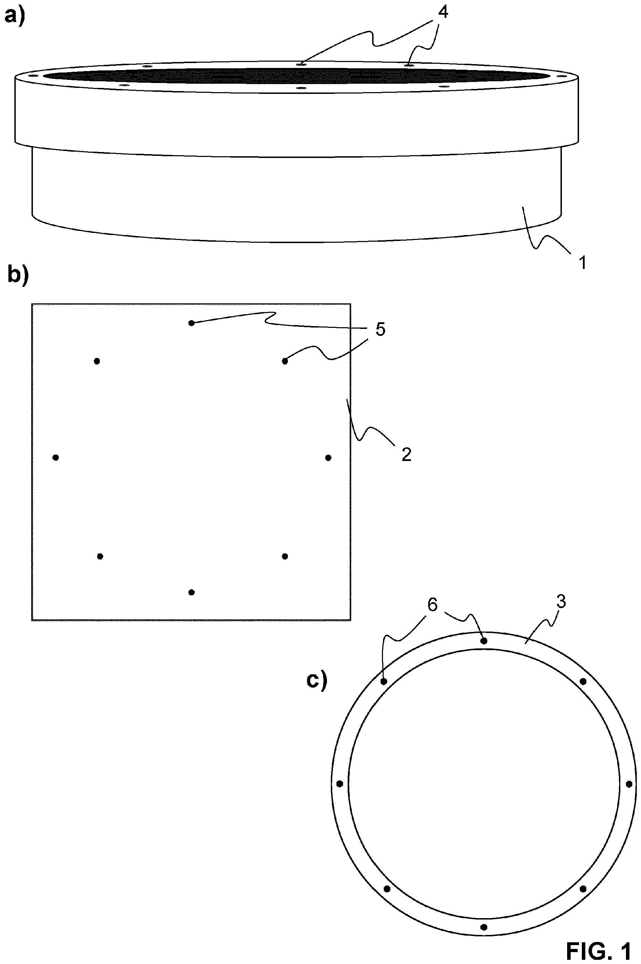

- Fig. 1: shows a schematic representation of the permeation measurement setup, wherein in a) the container is shown, in b) the specimen plate and in c) the ring.

### DESCRIPTION OF PREFERRED EMBODIMENTS

The parts of the invention are moulded bodies that are made using a moulding composition that comprises or consists of:
(A) at least one polyamide;
(B) glass fibres with a non-circular cross section;
(C) at least one component chosen from additives, modifiers and moulding aids.

In the working examples the materials according to table 1 were used.

**Table 1: materials used**

| | | **Commercial products** | **Supplier** |
|---|---|---|---|
| **A1** | PA12 | Polyamide 12, ηᵣₑₗ =1.64-1.69 | EMS-CHEMIE AG, Domat/Ems, Switzerland |
| **A2** | PA12 | Polyamide 12, ηᵣₑₗ = 1.85-1.95 | EMS-CHEMIE AG, Domat/Ems, Switzerland |
| **A3** | Transparent copolyamide | MACMT/MACMI/12 (38/38/24 mol-%), ηᵣₑₗ = 1.51 - 1.57 | EMS-CHEMIE AG, Domat/Ems, Switzerland |
| **B1** | Flat Glass fibres, E-Glass | CSG3PA-820, length 3 mm, main axis length 28 µm, minor axis length 7 µm, axis ratio = 4, silane sizing | NITTO BOSEKI, Japan |
| **B2** | Round Glass fibres, E-Glass | 995 EC10-4.5, length 4.5 mm, round cross section, diameter 10 µm, silane sizing | European Owens Corning Fiberglas SPRL, Belgium |
| **C1** | Stabiliser | SANDOSTAB P-EPQ | Clariant Plastics & Coatings (Deutschland) GmbH, Germany |
| **C2** | Processing aid/lubricant | Magnesium stearate AV | Bärlocher GmbH, Germany |
| **C3** | Antioxidant | HOSTANOX O 3 P | Clariant Produkte (Deutschland) GmbH, Germany |
| **C4** | Colorant (black PA12 masterbatch) | MB L20 SCHWARZ N115/25 | EMS-CHEMIE AG, Domat/Ems, Switzerland |

Moulding compositions for all examples were produced in a FEDDEM FED 26 twin-screw extruder from FEDDEM GmbH & Co. KG. Compositions as listed in Table 2 were compounded, adding component (B) by the side feeder.

**Table 2: compositions**

| | | **B1** | **B2** | **B3** | **VB1** |
|---|---|---|---|---|---|
| **A1** | wt% | 69.1 | 30.0 | | 69.1 |
| **A2** | wt% | | | 67.9 | |
| **A3** | wt% | | 19.1 | | |
| **B1** | wt% | 30 | 50 | 30 | |
| **B2** | wt% | | | | 30 |
| **C1** | wt% | 0.2 | 0.2 | 0.2 | 0.2 |
| **C2** | wt% | 0.2 | 0.2 | 0.2 | 0.2 |
| **C3** | wt% | 0.5 | 0.5 | 0.5 | 0.5 |
| **C4** | wt% | | | 1.2 | |

### Test parts:

The compounded compositions were injection moulded (Aarburg Allrounder, tool temperature 80 °C) to produce specimens appropriate for the testing. For permeation tests, the test parts were 100 × 100 mm with 1 mm thickness. For mechanical and tensile tests, the test parts were according to ISO 527, ISO 179/1eA, ISO 179/1eU.

### Test methods:

### Permeation tests:

Permeation was measured with the following liquids:
- FAM-B, a methanol-containing simulated fuel (Liquid 2, DIN 51604);
- E10 (DIN 51626);
- E85 (ASTM 5798)

Permeation values were determined at either 20 °C or 60 °C in a manner in corresponding to DIN 53122-1.

50 millilitres of the required fluid was added to an aluminium container 1 as depicted in Fig. **1a****)** with inner diameter of 80 mm and outer diameter of 100 mm and a depth of 21.5 mm. The container includes 8 M4-threaded holes 4.

As test specimens, 100 × 100 × 2 mm plates 2 of the material to be tested were injection moulded and drilled with holes 5 to align with the holes 4 of the aluminium container 1 **(****Fig. 1b****).** An aluminium ring 3 **(****Fig. 1c****)** with inner diameter of 80 mm and outer diameter of 100 mm with 4.2 mm holes 6 to align with the drilled holes 5 of the injection-moulded plate was placed over the plate 2. The orientation of the system was such that the aluminium containers 1 remain under the plate 2 at all times.

The container was filled with 50 millilitres of the required fluid and sealed by screwing the ring 3 onto the plate 2 into place on the aluminium container 1. The closed system was then placed into an oven, for elevated temperature measurements (as reported in Table 4). Permeation was measured gravimetrically at regular intervals until a continuous, linear change in weight of the test specimen was established.

*Tensile modulus, tensile strength at break elongation at break and energy at break*: were measured according to ISO 527 at a tensile speed of 1 mm/min on an ISO 3167 compliant tensile bar. The values for dry were obtained on samples as moulded. The values for conditioned *(cond.)* were obtained from samples that were conditioned in accordance with ISO 527-1 (2019) with reference to ISO 291 (2008), storing specimens for 16 hours at 23 ±2 °C at 50±10% relative humidity.

*HOT A (1.8 MPa) and HDTC (8 MPa)*: ISO 75:2013, ISO impact specimen, 80*10*4, dry. *Mold shrinkage*: Measured according to ISO 294-4 (2018) on 60 × 60 × 20 mm specimens. Longitudinal and transverse values are reported.

*Relative viscosity*: DIN EN ISO 307 (2007), in 0.5 weight percent m-cresol solution at a temperature of 20 °C.

*Thermal behaviour* (melting point Tm and glass transition temperature (T_{g}): ISO standard 11357-1 (2016), -2 (2013) and -3 (2011), measured on granules, where the differential scanning calorimetry (DSC) is performed at a heating rate of 20 °C/min.

*Charpy impact strength and notched impact strength*: Measured according to ISO 179/keU or ISO 179/keA on the ISO test rod, standard ISO/CD 3167, type B1, 80 × 10 × 4 mm at a temperature of 23°C.

The results of the thermal, thermomechanical and mechanical tests are given in Table 3 and the results of the permeation tests are given in Table 4.

**Table 3: thermal, thermomechanical and mechanical test results**

| | **Norm** | **Unit** | **B1** | **B2** | **B3** | **VB1** |
|---|---|---|---|---|---|---|
| Rel. viscosity (0.5%,m-cresol, 20 °C) | DIN EN ISO 307 (2007) | | 1.83 | 1.79 | 1.961 | 1.833 |
| Tm | ISO 11357 | °C | 179 | 178 | 177 | 178.8 |
| Tg | ISO 11357 | °C | 29 | 31 | 31 | 27.2 |
| Tensile modulus | 5mm/min, dry | MPa | 7027 | 7770 | 7640 | 6913 |
| Tensile strength at break | 5mm/min, dry | MPa | 116 | 133 | 126 | 110 |
| Elongation at break | 5mm/min, dry | % | 4.2 | 4.1 | 3.3 | 5.5 |
| Energy of break | 5mm/min, dry | J | 10.9 | 12.2 | 8.8 | 14.5 |
| Tensile modulus | 5mm/min, cond. | MPa | 6035 | 7580 | 6760 | 5990 |
| Tensile strength at break | 5mm/min, cond. | MPa | 100 | 125 | 105 | 99 |
| Elongation at break | 5mm/min, cond. | % | 4.7 | 3.9 | 3.3 | 6.1 |
| Energy of break | 5mm/min, cond. | J | 10.8 | 10.6 | 7.6 | 14.2 |
| Charpy impact -30 °C, dry | ISO 179-2:1997 | kJ/m² | 74 | 74 | 66 | 83 |
| Charpy impact 23 °C, dry | ISO 179-2 | kJ/m² | 87 | 82 | 66 | 96 |
| Charpy impact, 23 °C, cond. | ISO 179-2 | kJ/m2 | 70 | 73 | 59 | 77 |
| Notched Charpy impact -30 °C, dry | ISO 179-2 | kJ/m² | 26.7 | 12.5 | 17.2 | 25.4 |
| Notched Charpy impact 23 °C, dry | ISO 179-2 | kJ/m² | 20.9 | 17.3 | 13.7 | 18.8 |
| Notched Charpy impact, 23 °C, cond. | ISO 179-2 | kJ/m2 | 22.7 | 15.7 | 16.2 | 23.3 |
| HDT A (1.8 MPa) | ISO 75 | °C | 155 | 160 | 163 | 149 |
| HDT C (8 MPa) | ISO 75 | °C | 82 | 84 | 114 | 73 |
| Linear mold shrinkage long. | 24h, dry | % | 0.11 | 0.09 | 0.23 | 0.1 |
| Linear mold shrinkage trans. | 24h, dry | % | 0.34 | 0.29 | 0.48 | 0.52 |
| Linear mold shrinkage long. | 14d, dry | % | 0.1 | 0.08 | 0.2 | 0.08 |
| Linear mold shrinkage trans. | 14d, dry | % | 0.33 | 0.25 | 0.44 | 0.48 |

**Table 4: permeation test results**

| | **Norm** | **State** | **Unit** | **B1** | **B2** | **B3** | **VB1** |
|---|---|---|---|---|---|---|---|
| Permeation (liquid) | FAM B, 60 °C | dry | g/(m2*d) | 64.64 | 71.0 | 74.5 | 87.4 |
| Permeation (liquid) | E10, 60°C | dry | g/(m2*d) | 15.2 | - | 16.4 | 19.1 |
| Permeation (liquid) | E85, 60°C | dry | g/(m2*d) | 30.2 | - | 31.7 | 41 |

### Discussion of results

As is evident from the data shown in Table 4, inventive examples B1-B3 demonstrate a desirable reduction in permeability to FAM B when compared with comparative example VB1 with round glass fibre reinforcement. The inventive examples B1 and B3 furthermore show a low permeability of test fuels E10 and E85 when compared with the round-glassfibre reinforced comparative example VB1. The mechanical properties of all inventive and comparative examples are reasonable, as would be expected from materials with glass reinforcement loadings of 30 % by weight. The use of flat glass fibres in the moulding composition used in the invention has the unexpected effect of reducing permeation in while providing the connector with an equivalent degree of reinforcement as may be expected from glass fibres with circular cross section.

## Claims

1. Use of a part comprising at least a portion of a polyamide moulding composition said portion for direct contact with a fuel,
wherein the polyamide moulding composition consists of the following components in the following proportions:
(A) 30-90% by weight of at least one polyamide;
(B) 10-70% by weight of fibers with non-circular cross-section;
(C) 0-10% by weight of at least one stabiliser;
(D) 0-10% by weight of additives different from (B) and (C),
wherein the sum of (A)-(D) makes up 100% of the portion.

2. Use according to claim 1, wherein the polyamide moulding composition has the following proportions:
(A) 50-90% or 52-80% by weight, preferably 55-75% by weight, most preferably 60-70% by weight of component (A);
(B) 10-50% or 15-45% by weight, preferably 20-40% by weight, most preferably 25-35% by weight of component (B);
(C) 0.05-8% by weight, preferably 0.1-5% by weight, most preferably 0.15-2% by weight of component (C);
(D) 0.01-8% by weight, preferably 0.1-5% by weight, most preferably 0.5-3% by weight of component (D).

3. Use according to claim 1, wherein component (A) in a major proportion comprises or consists of at least one polyamide with a relative viscosity, measured according to ISO 307:2019 in m-cresol at a concentration of 0.5 weight percent at a temperature of 20°C of at least 1.5 or of at least 1.6, preferably of at least 1.7, most preferably of at least 1.8 or at least 1.9.

4. Use according to any of the preceding claims, wherein component (A) is at least one aliphatic or partially aromatic polyamide derived from at least one dicarboxylic acid and at least one diamine or from at least one lactam or α,ω-amino acid, wherein preferably component (A) is selected from at least one of polyamide 6, polyamide 12, polyamide 11, polyamide 6/12, polyamide 6/66, preferably polyamide 12, and/or is derived from at least one aliphatic or aromatic dicarboxylic acid, preferably selected from the group consisting of succinic acid, glutaric acid, adipic acid, pimelic acid, suberic acid, azelaic acid, sebacic acid, undecanedioic acid, dodecanedioic acid, brassylic acid, thapsic acid, octadecanedioic acid, terephthalic acid, isophthalic acid, or a combination thereof and from at least one aromatic, aliphatic or cycloaliphatic diamine selected from the group consisting of: an aliphatic, preferably linear diamine with 4-10, preferably 4-8, most preferably 6 carbon atoms, 1,3-bis(aminomethyl)cyclohexane (1,3-BAC), 1,4-bis(aminomethyl)cyclohexane (1,4-BAC), bis(4-aminocyclohexyl)methane (PACM), isophoronediamine (IPD), bis(3-methyl-4-aminocyclohexyl)methane (MACM), m-xylylenediamine (MXDA), p-xylylenediamine (PXDA) or a combination thereof, wherein preferably component (A) is selected from the group consisting of the following polyamides: 12, 46, 66, 410, 610, 612, 614, 416, 616, 618, 6I/6T, 6T/6I, 56, 510, 512, 514, 516, 518, 1010, 1012,1014, 1016, 1018, MACM12, PACM12, MACM14, PACM14, MACMI/12, 6I/6T/612/MACMI/MACMT/MACM12, MACMI/MACMT/12, 6I/6T/MACMI/MACMT/PACMI/PACMT/12, 4T, 5T, 6T, 9T, 10T, 12T, 6T/6I, 6T/66, 6T/12, 6T/612, 6T/10T, 10T/12, 10T/612, 10T/11, 1012/10T, 1212/10T, 1212/6T, 1010/6T, or a mixture thereof.

5. Use according to any of the preceding claims, wherein component (A) consists of at least one lactam-based polyamide based on lactam with at least 8 carbon atoms, preferably at least 10 carbon atoms, most preferably 12 carbon atoms, wherein preferably it primarily or completely consists of such a lactam-based polyamide with a relative viscosity of at least 1.9, or is a blend of such lactam-based polyamides comprising at least one lactam with a relative viscosity of at least 1.9 measured according to ISO 307:2019 in m-cresol at a concentration of 0.5 weight percent at a temperature of 20°C.

6. Use according to any of the preceding claims, wherein the polyamide of component A has an excess of amine end groups, wherein preferably there is a concentration of amino groups in the range of 30 - 90 mmol/kg, more preferably the concentration of amine end groups is in the range of 40 - 60 mmol/kg.

7. Use according to any of the preceding claims, wherein component (B) is selected as glass fibres, preferably selected from E glass, A glass, C glass, D glass, M glass, S glass, R glass or mixtures thereof, wherein E glass is preferred, wherein preferably the fibres are provided with a sizing, preferably an aminosilane sizing.

8. Use according to any of the preceding claims, wherein the fibres of component (B) have a ratio of cross-sectional major to minor axes in the range between 8 and 2, preferably between 6 and 2, more preferably between 5 and 3
and/or wherein the length of the major axis is in the range of 15-40 µm, preferably in the range of 20-35µm, and the length of the minor axis is in the range of 4-15µm, preferably in the range of 5-10µm.

9. Use according to any of the preceding claims, wherein component (C) is selected as at least one light stabiliser or at least one heat stabiliser and/or antioxidant, preferably from at least one organic heat stabiliser and/or antioxidant, preferably at least one organic stabiliser based on sterically hindered phenols and/or phosphonites, most preferably selected from the group consisting of N,N'-hexamethylene-bis-3-(3,5-di-tert-butyl-4-hydroxyphenyl)-propionamide, bis-(3,3-bis-(4'-hydroxy-3'-tert-butylphenyl)-butanoic acid)-glycol ester, 2,1'-thioethylbis-(3-(3,5-di-tert-butyl-4-hydroxyphenyl)-propionate, 4,4'-butylidene-bis-(3-methyl-6-tert-butylphenol), ethylene bis[3,3-bis(3-tert-butyl-4-hydroxyphenyl)butyrate], triethyleneglycol-3-(3-tert-butyl-4-hydroxy-5-methylphenyl)-propionate, octadecyl-3-(3,5-di-tert-butyl-4-hydroxyphenyl)propionate, 1,3,5-trimethyl-2,4,6-tris(3,5-di-tert-butyl-4-hydroxybenzyl)benzene, adducts from phenylenediamine with acetone, adducts from phenylenediamine with linolene, N,N'-dinaphthyl-p-phenylenediamine, N-phenyl-N'-cyclohexyl-p-phenylenediamine or mixtures of two or more thereof, stabilisers from the group of phosphites and phosphonites, in particular triphenylphosphite, diphenylalkylphosphite, phenyldialkylphosphite, tris(nonylphenyl)phosphite, trilaurylphosphite, trioctadecylphosphite, distearylpentaerythritoldiphosphite, tris(2,4-di-tert-butylphenyl)phosphite, diisodecylpentaerythritoldiphosphite, bis(2,4-di-tert-butylphenyl)pentaerythritoldiphosphite, bis(2,6-di-tert-butyl-4-methylphenyl)-pentaerythritoldiphospite, diisodecyloxypentaerythritoldiphospite, bis(2,4-di-tert-butyl-6-methylphenyl) pentaerythritoldiphosphite, bis(2,4,6-tris-(tert-butylphenyl))pentaerythritol-diphosphite, tristearylsorbitoltriphosphite, tetrakis(2,4-di-tert-butylphenyl)-4,4'-biphenylenediphosphonite, 6-isooctyloxy-2,4,8,10-tetra-tert-butyl-12H-dibenz-[d,g]-1,3,2-dioxaphosphocine, 6-fluoro-2,4,8,10-tetra-tert-butyl-12-methyl-dibenz[d,g]-1,3,2-dioxaphosphocine, bis(2,4-di-tert-butyl-6-methylphenyl)methylphosphite and bis(2,4-di-tert-butyl-6-methylphenyl)ethylphosphite, tris[2-tert-butyl-4-thio(2'-methyl-4'-hydroxy-5'-tert-butyl)-phenyl-5-methyl]phenyl-phosphite and tris(2,4-di-tert-butylphenyl)phosphite, 2,6-di-tert-butyl-4-(4,6-bis(octylthio)-1,3,5-triazian-2-ylamino)phenol, triethyleneglycol bis(3-tert-butyl-4-hydroxy-5-methylphenyl)propionate, tetrakis-methylene(3,5-di-tert-butyl-4-hydroxyhydrocinnamate)methane, 3-(3,5-di-tert-butyl-4-hydroxyphenyl)propionic acid, 2,2"-methylenebis-(6-tert-butyl-p-cresol)monoacrylate and mixtures thereof.

10. Use according to any of the preceding claims, wherein component (D) is selected from the group consisting of non-fibrous fillers, electrostatic discharge and/or conductivity additives, preferably chosen from the group consisting of carbon black, carbon nanotubes, carbon fibres, graphene, graphite, and mixtures thereof, flame retardants, pigments, colorants, markers, processing aids including lubricants, intumescent agents, plasticisers, impact modifiers, flow aids, nucleating agents, mould release agents or a combination thereof.

11. Use according to any of the preceding claims, wherein the part is an injection moulded part.

12. Use according to any of the preceding claims, wherein the fuel is selected as FAM-B, wherein the permeation value of the polyamide moulding composition with respect to FAM-B at 60°C is below 80 g/(m²*d), preferably below 75 g/(m²*d) and most preferably in the range of 60-75 g/(m^{2*}d);
and/or wherein the fuel is selected as E10, wherein the permeation value of the polyamide moulding composition with respect to E10 at 60°C is below 19 g/(m²*d), preferably below 18 g/(m²*d) and most preferably in the range of 12-17 g/(m²*d)
and/or wherein the fuel is selected as E85, wherein the permeation value of the polyamide moulding composition with respect to E85 at 60°C is below 40 g/(m²*d), preferably below 55 g/(m²*d) and most preferably in the range of 25-33 g/(m^{2*}d).

13. Use according to any of the preceding claims, wherein the part takes the form of a connector, preferably of a welded connector, a quick fix connector, preferably for the automotive field as a fuel-line connector.

14. Use according to any of the preceding claims, wherein the part consists of said polyamide moulding composition.

15. Connector comprising at least a portion of a polyamide moulding composition said portion for direct contact with fuel,
wherein the polyamide moulding composition consists of the following components in the following proportions:
(A) 30-90% or 50-90% by weight of at least one polyamide;
(B) 10-70% or 10-50% by weight of fibers with non-circular cross-section;
(C) 0-10% by weight of at least one stabiliser;
(D) 0-10% by weight of additives different from (B) and (C),
wherein the sum of (A)-(D) makes up 100% of the portion.
